Europäisches Patentamt

European Patent Office

Office européen des brevets

(19)

(11) Publication number: **0 076 706**

**A1**

(12) **EUROPEAN PATENT APPLICATION**

(21) Application number: **82305327.7**

(22) Date of filing: **07.10.82**

(51) Int. Cl.³: **B 62 D 35/00**

(30) Priority: **07.10.81 US 309310**

(43) Date of publication of application:
**13.04.83 Bulletin 83/15**

(84) Designated Contracting States:
**DE FR GB**

(71) Applicant: **FORD MOTOR COMPANY LIMITED
Eagle Way
Brentwood Essex CM13 3BW(GB)**

(84) Designated Contracting States:
**GB**

(71) Applicant: **FORD-WERKE AKTIENGESELLSCHAFT
Ottoplatz 2 Postfach 21 03 69
D-5000 Köln 21(DE)**

(84) Designated Contracting States:
**DE**

(71) Applicant: **FORD FRANCE SOCIETE ANONYME
344 Avenue Napoléon Bonaparte B.P. 307
F-92506 Rueil Malmaison Cedex(FR)**

(84) Designated Contracting States:
**FR**

(72) Inventor: **Langran, Philip Anthony
2040 Woodhill
Northville Michigan 48167(US)**

(72) Inventor: **Moroney, James Edward
17754 Five Points Road
Detroit Michigan 48249(US)**

(72) Inventor: **Young, John Alfred
41750 West Eight Mile
Northville Michigan 48167(US)**

(74) Representative: **Messulam, Alec Moses et al,
A. Messulam & Co. 24 Broadway
Leigh on Sea Essex SS9 1BN(GB)**

(54) **Closure device for aerodynamic device.**

(57) A closure device (10) is adapted to be mounted at the end of an elongated center section (600) of an aerodynamic device adapted to be disposed along a windward edge of a body in an airstream, such as a cargo container of a motor vehicle. Preferably the closure device comprises high impact fiber reinforced plastic and is adapted to form a telescopic joint with the end of the elongated center section, wherein the degree of overlap can be adjusted such that the length of the aerodynamic device is approximately equal to that of the windward edge.

FIG.1

EP 0 076 706 A1

CLOSURE DEVICE FOR AERODYNAMIC DEVICE

This invention relates to an aerodynamic device to reduce wind resistance or drag on a body in an airstream. More particularly, it relates to a closure device such as an end cap or a corner piece to cover the end of an elongated center section of an aerodynamic device mounted or otherwise disposed along the windward edge of a body in an airstream.

Aerodynamic devices, for example, airfoil devices are known which are adapted to be attached to a body in an airstream to reduce wind resistance or drag. Such devices are useful on the cargo containers of transportation vehicles such as, for example, trucks, rail cars and trailers including, for example, semitrailers, utility trailers, cargo trailers, tank trailers, and the like. In view of the large windward surface area of these bodies, and the high velocity of the on-coming airstream, reduced wind resistance or drag on such vehicle bodies provided by such devices can result in significant fuel conservation. This is important both for economy of operation and for conservation of fuel resources.

Typically, an aerodynamic device for such use comprises an elongated, convex section adapted to be mounted along a windward edge of the body. A windward edge is one formed by a first side of the body in an airstream which faces into the on-coming airstream, the windward bodyside, and a second side of the body flanking the first. Thus, in the case of a truck or semitrailer, for example, there is a horizontal windward edge formed by the front side (i.e., windward side) of the cargo container and the top of the cargo container. An aerodynamic device could be attached along that windward edge to reduce wind resistance or drag.

Aerodynamic devices are known, for example, which comprise an elongated protrusion having a substantially smooth, convexly arcuate outer surface projecting outwardly of the windward bodyside. In particular, aerodynamic devices are known which have a gradual convex arcuate rise from a plane transverse to the airstream, (that is, from a windward body side such as the front of a cargo container,) which arcuate rise continues around to substantially meet the windward edge. These devices are exemplified in U.S. Patent 3,934,922 to McCready, Jr. et al, the disclosure of which is incorporated herein by reference. Alternate designs for an aerodynamic drag reducing edge are taught in U.S. patent application Serial Number 138,136 filed April 7, 1980, incorporated herein by reference. The device of that application is elongated and adapted to wrap around the windward edge of a body in an airstream, particularly a vehicle cargo container, for example, a truck. The structure is adapted to rise from a point of attachment on the windward bodyside toward the on-coming airstream in a convex arc which extends around approximately 180° to a point outboard of the windward edge. Thereafter it extends towards a substantially tangential merger with the flanking body side at a point down-wind of the windward edge. The surface of the device may inflect from convex to concave and the portion extending from the convex arc toward merger with the flanking body. side may have concave portions and/or may have gradual undulations, or the like.

These aerodynamic devices can have a constant cross-section along the center portion, but for reasons of improved aerodynamic effectiveness, structural support, improved appearance or other reasons, they are adapted to be closed at the end. The closure can be accomplished by forming a suitable integral portion at the end of the device. Devices closed at the end can be formed, for example, by so-called "hand lay-up" techniques, wherein each unit is individually hand-made on a model or form in the exact size for the particular truck or other body on which the device is to be mounted. Such manufacturing methods present, however, significant manufacturing complexities and result in significant additional time and cost over the manufacture of the elongated constant cross-section portion of the device alone. The constant cross-section portion could be made, for example, by extrusion or pultrusion methods well known to the skilled of the art and simply manufactured to the desired length. In that case, however, the device would be open-ended.

An additional problem lies in the need to match the size of the device to the exact length of the windward edge on which it is to be mounted. If the device overhangs the end of the windward edge or is shorter than same, reduced performance would result. Often, similar applications require approximately equal length devices. Thus, for example, the upper, horizontal windward edge of a truck or trailer cargo container would be approximately equal to that of many others. A device of standard length could fit all of those trucks at least approximately. There is significant disadvantage, however, in a less-than-exact fit.

It is, therefore, an object of this invention to provide an aerodynamic device closed at the end(s). In this regard, it is a particular object of the invention to provide an aerodynamic device closed by means which avoid the manufacturing complexities and costs inherent in forming an integral closure portion at the end of the elongated center section. More specifically, it is an object to provide a closure device and an aerodynamic device comprising same, which closure unit is adapted for use with an elongated center section to cover the end thereof and to close it against the body on which it is mounted.

According to the present invention, the foregoing objectives and others are met by a closure device for an aerodynamic device having an elongated center section adapted to be disposed along a windward edge of a body in an airstream. The closure device can comprise, for example, an end cap comprising a closure wall adapted to substantially fill the opening between the end of the elongated center section and the body. The end cap can further comprise a flange entending from the closure wall and adapted to overlap the end of the elongated center section and to match the contour thereof, whereby a telescopic joint is formed. In use, the amount of overlap between the elongated center section and the flange preferably can be adjusted prior to fixing the position of the end cap such that the overall width of the aerodynamic device can be made substantially equal to that of the windward edge along which the aerodynamic device is disposed.

In a more preferred embodiment, the closure device can comprise a corner piece adapted to be mounted on a corner of the body at the end of the windward edge. A portion of the corner piece overlaps and forms a telescopic joint with the end of the elongated center section. In this embodiment, the outside wall of the corner piece lies against that side of the body which flanks the two bodysides forming the windward edge. That is, the amount of overlap between the corner piece and the elongated center section ,is adjusted such that the outside wall of the corner piece is brought adjacent to the flanking bodyside. The amount of overlap between the elongated center section and the wall(s) of the corner piece preferably is adjusted prior to fixing the position of the corner piece, such that the overall width of the aerodynamic device is made substantially equal to that of the windward edge on which the aerodynamic device is disposed.

In an alternate embodiment the invention comprises an aerodynamic device adapted to be disposed along a windward edge of a body in an airstream, which aerodynamic device comprises an open-ended, elongated center section, and a closure device as described above, adapted to be mounted at the end of the elongated center section to close same. One most preferred embodiment comprises the aerodynamic device of this invention employed on the upper, forward edge of the cargo container of a motor vehicle, for example, a truck or trailer. In that case, there is preferably a closure device for each end of the elongated center section.

The invention will now be further described, by way of example, with reference to the accompanying drawings, in which:

Fig. 1 is a perspective view of a closure device comprising an end cap according to the present invention. The end cap is shown proximate the end of an elongated center section of an aerodynamic device disposed on the windward edge of a body in an airstream.

Fig. 2 is a perspective view of the outside of a closure device comprising a corner piece according to the present invention. The corner piece is shown proximate the end of an elongated center section of an aerodynamic device disposed on the windward edge of a body in an airstream.

Fig. 3 is a perspective view showing the outside of a corner piece according to a preferred embodiment of the invention.

Fig. 4 is a perspective view showing the inside of the corner piece of Fig. 3.

Fig. 5 is a perspective view of an alternate embodiment of the invention comprising an assembly of an elongated center section, broken away for clarity, and a closure unit comprising a corner piece on each end of the elongated center section. A telescopic joint is shown between each corner piece and the corresponding end of the elongated center section. The assembly is shown disposed on the windward edge of the cargo container of a truck.

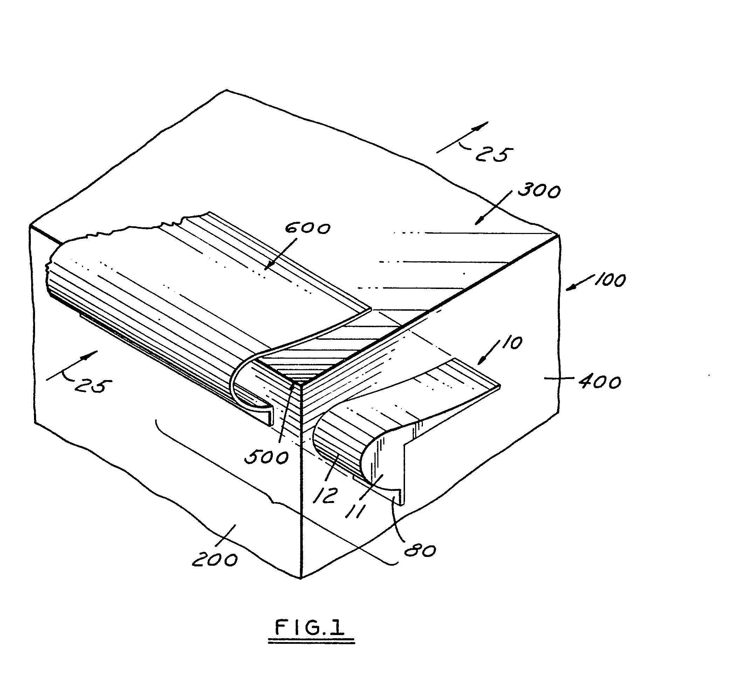

Referring to Fig. 1, a closure device is illustrated comprising an end cap 10. Closure wall 11 is adapted to substantially fit the opening at the end of the elongated center section 600 between it and the body 100 on which it is mounted. The end cap 10 is provided with flange 12 adapted to overlap the end of the elongated center section to form a telescopic joint. The overlap can be such that either the end cap flange 12 or the elongated center section is inward of the other. In either case, to provide structural support and beneficial aerodynamics, it is preferred that the overlapping surfaces be of matching contour, such that there is contact between them over substantially the entire area of overlap. To provide beneficial aerodynam   not only the overlapping portion of flange 12, but rather also that portion of the end cap flange 12 which might be exposed to form, in effect, an extension of the elongated center section, will preferably have the same cross-sectional contour as the elongated center section. Wind direction is indicated by arrows 25.

Preferably, the end cap position is adjusted by increasing or decreasing the amount of overlap such that closure wall 11 is brought substantially flush with flanking bodyside 400. It should be noted, however, that in use the end cap or other closure device would not normally be in slidable relation with the elongated center section. Rather, the position of the end cap would be fixed. The telescopic joint permits adjustment of the closure device to the desired position prior to fixing the position by attaching the closure means to the elongated center section or to the body or to both. In this manner, the a odynamic device is made to fit substantially exactly the windward edge along which it is mounted.

The end cap can be mounted by any suitable means including, for example, rivets, screws, adhesive, or the like. The end cap can further comprise a flange 80 by which it can be mounted to the body. Alternately, or in addition, the end cap flange 12 can be attached to the elongated center section at the telescopic joint formed at the area of overlap.

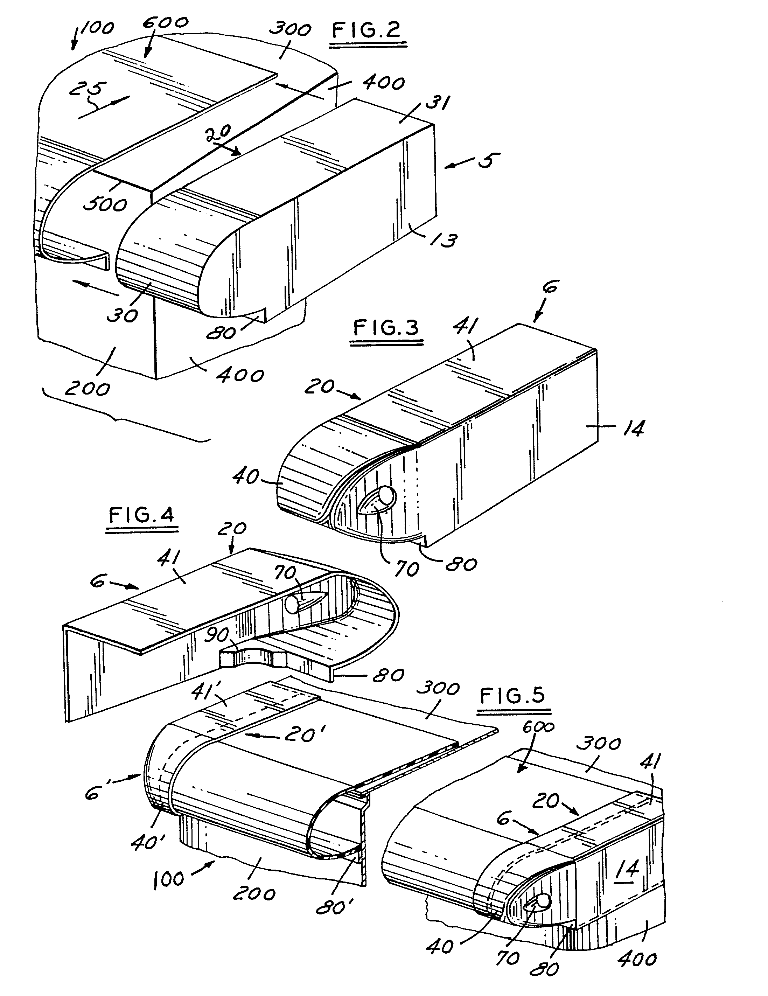

Referring to Figs. 2-5, an alternate embodiment of the invention comprises a closure device which comprises a corner piece adapted to be mounted on the corner of a body 100 where, typically, a windward body side 200 meets a second bodyside 300 flanking the windward side and a third bodyside 400 flanking both the windward and second bodyside. Wind direction is indicated by arrow 25. In use, as can be seen from Fig. 2, surface 13 of the corner piece would be perpendicular to the windward edge 500 along which the elongated center section 600 of an aerodynamic device is mounted. The portion of surface areas 30 and 31 proximate edge 20 would overlap the end of the elongated center section of the aerodynamic device (either one being inward of the other) to a telescopic joint. The extent of overlap is preferably that necessary to bring surface 13 adjacent to the third body side. The elongated center section would thus be closed against the body at that corner.

The overlapping surfaces, are preferably of matched contour, such that there is contact between them over substantially the entire area of overlap. Furthermore, it is preferred that the non-overlapping portion of surface areas 30 and 31 of the corner piece, that is, the portion of those surface areas which are exposed when the corner piece is in use and fixed in the desired position, is so contoured as to form, in effect, an extension having approximately the same cross-sectional contour as the elongated center section. It is thought that these preferred forms provide an increased measure of structural support to the aerodynamic device as a whole and an increased aerodynamic efficiency.

Thus, for example, if (as illustrated) the elongated center section presents a convexly arced surface facing the oncoming airstream and then fairs back toward substantially tangential contact with a flanking body side, then, preferably, edge 20 and at least that portion of windward surface area 30 and leeward surface area 31 overlapping the end portion of the elongated center section would also, as shown, be adapted to arc outward convexly from the windward body side and then fair back toward substantially tangential contact with the flanking bodyside.

A telescopic joint is formed between the corner piece and the elongated center section along the entire area of overlap. It should be noted that windward surface area 30 and leeward surface area 31 would preferably be integrally connected portions of a single, continuous surface.

As exemplified by closure device 6 illustrated in Figs. 3-5 (and closure device 6' of Fig. 5), the corner piece is preferably fashioned to reduce air resistance or drag. Accordingly, a corner piece such as exemplified in Figs. 3-5 can be provided, which presents a more bullet-shaped windward surface area 40 into the airstream. That is, windward surface area 40 arcs convexly from surface area 41 and, in addition, arcs convexly from surface area 14. In this manner, improved aerodynamics are provided.

As in the case of the end cap, a closure device comprising a corner piece can be mounted by attachment to the body, to the elongated center section or to both. Preferably it is attached at least to the body. Such attachment can include riveting, bolting, gluing or other suitable means. For this purpose, preferably a flange 80 is provided for attachment to the windward bodyside.

The closure means can, optionally, be provided with a fitting 70 for a light, a ventilator or other accessory. This accessory fitting can be formed in the surface of the corner piece, comprising, for example, a convexity and/or hole in that surface. The fitting can comprise a suitable device attached to or embedded in the surface. Exemplary fitting 70 in Fig. 3-5 is a light fitting comprising a site for an electrical socket extending through the surface of the corner piece and a concavity formed in the surface.

Referring to Fig. 5, a preferred embodiment of the invention comprises an aerodynamic device comprising an elongated center section 600 and at least one closure means comprising, for example, as illustrated, corner piece 6 adapted to close the elongated center section against the body on which it is mounted. Optionally, a closure means, for example, as illustrated, corner piece 6' can be employed to cover the opposite end, if any, of the elongated center section. In a particularly preferred embodiment, the elongated center section has a constant cross-section, and is adapted to be mounted along substantially the entire length of a windward edge of a body in an airstream. It is fashioned most preferably such that its cross-sectional contour extends in an arc outward convexly from the windward body side into the airstream outboard of the windward edge, through the plane of the second bodyside around to approximately the plane of the windward bodyside. From that point, preferably, the surface fairs toward substantially tangential contact with the second body side. This preferred embodiment further comprises a closure device comprising a corner piece overlapping the end of the elongated center section and following closely the cross-sectional contour thereof to form a telescopic joint therewith and, in effect, an extension of the surface thereof to approximately the end of the windward edge.

The elongated center section preferably has a constant cross-section and is manufactured by pultrusion methods well known to the skilled of the art. When a closure device according to the present invention is employed, the elongated center section can advantageously be made in a standard length which is shorter than the length of the windward edge to which it is to be attached. Differences between the length of the elongated center section and the length of the windward edge of individual bodies on which it might be mounted would affect only the amount of overlap between the elongated center section and the end closure device. The closure device is simply telescoped in or out to provide in each instance a perfectly fitted aerodynamic device. The elongated center section of the invention is particularly useful where it is to be used in conjunction with a windward edge of unknown exact length such as, for example, where it is to be mass produced for use with trucks of various sizes. In that case it can advantageously be made in a standard length which is longer than any of the various lengths of such windward edges. The center section would then simply be cut to a length less than but approximately equal to the length of the particular windward edge to which it was to be attached. There would be no need to cut the length of the elongated center section with precision, since upon being mounted on the windward edge with the end closure device(s) in place, differences between the length of the windward edge and that of the elongated center section would affect only the amount of overlap between the elongated center section and the end device(s).

The closure device and elongated center section can comprise any material which can be suitably formed and which will substantially retain its shape during use. Many suitable materials are known to the skilled of the art and include, for example, sheet metal, metal/plastic laminate and plastic, which is preferred, including, for example, high impact plastic and reinforced plastic which are most preferred. The parts can be manufactured according to any of several methods, exemplary of which are stamping in the case of sheet metal, roll-forming in the case of metal/plastic laminate and in the case of plastic and reinforced plastic, hand lay-up upon a form, molding such as reaction or resin injection molding, or pultrusion. Preferably the elongated center section has a constant cross-section and is manufactured by pultrusion method using, for example, high glass (preferably 50% or more) epoxy resin, vinyl ester resin or, most preferably in view of its commercial availability, low cost, ease of use, strength, impact resistance and other physical properties, thermoset polyester resin. The closure device can be molded of any suitable material, for example, fiber reinforced thermoplastic, preferably fiber reinforced high impact strength plastic such as, for example, impact grade ABS thermoplastic. Most preferred is glass fiber reinforced polyurethane in view of its commercial availability, low cost, ease of use, and combination of high tensile strength, high elongation, excellent tear strength and high impact resistance over a wide temperature range, providing durable service under severe operating conditions. Contours such as concavities, convexities, undulations, and the like can easily be provided in the surface of the closure device during manufacture by molding or other suitable method.

The mounting of the closure device for use in an aerodynamic device will now be discussed. While a flange, as described above, facilitates mounting, it is desirable that mounting be made more securely. A problem in this regard stems from the wide variety of body shapes on which it might be desired to mount the closure means. Even the shape of the windward edge of truck or trailer cargo container (and that of the corner on each side of the windward edge) vary significantly, some being rounded, others rectangular, etc. To strengthen the mounting of the end cap onto the body, the closure device can be provided with a bracket such as, for example, the bracket 90 shown in Fig. 4. Preferably the bracket is fashioned of a material suitable to be trimmed such as, for example, wood or, preferably, plastic, such as polyurethane or ABS. In that case the bracket can be trimmed to fit against the contour of the body at the point where it meets and preferably can be attached to the body. The trimmable bracket can be secured to the closure device in any suitable manner, of which many are known to the skilled of the art, including, for example, by glue.

In a preferred alternate embodiment, however, the mounting of the end cap onto the body can be strengthened by providing a flange in place of bracket 90. The flange can be suitably fashioned integral with the end cap and of the same material, provided however, that it be of a material suitable to be trimmed to fit against the contour of the body where they meet each other. It will be obvious to the skilled of the art, in view of the present disclosure, to employ additional trimmable flange(s) to provide closure for aperture(s) resulting from the contour of the body on which the closure device of the invention is to be mounted.

In certain applications, it may be advantageous or necessary to trim away a portion(s) of the end cap other than or in addition to the trimmable bracket or trimmable flange to properly fit the end cap to the body. In view thereof, it may be advantageous in appropriate instances to fashion the end cap entirely of a material which is suitable to be trimmed.

The closure device described and an aerodynamic device comprising such closure device together with an elongated center section provide a significant advance in the art. It is now possible to manufacture elongated center sections in a standard length and yet provide an aerodynamic device of exactly proper length for windward edges of varied lengths. Significant manufacturing advantages, especially reduced cost and increased production rate are achieved by pultrusion methods over other methods such as hand lay-up methods used to make other aerodynamic devices exactly sized for specific applications with integrally formed end closure means. In addition, significant marketing and distribution advantages are provided, since the elongated center section can now be fashioned in one or more standard lengths suitable for a range of windward edge lengths. Moreover, the aerodynamic device can be tightly closed against the bodysides at the end of the windward edge to prevent debris, precipitation, etc. from entering and collecting in the space between the elongated center section and the body on which it is mounted. Obvious advantages including reduced corrosion are thus provided. Also, the closure device, especially when employed with the above-described trimmable bracket or trimmmable flange of the invention, can be used to securely brace and/or mount the elongated center section to any of variously shaped windward edges.

**0076706**

### CLAIMS

1.  An aerodynamic device adapted to be disposed along a windward edge of a body in an airstream characterised by an open-ended, elongated center section (600), and a closure device (10,5,6) adapted to be mounted at the end of said elongated center section.

2.  An aerodynamic device as claimed in Claim 1, characterised in that said closure device (10, 5, 6) comprises, a closure wall (11, 13, 14) adapted substantially to fill the opening between the elongated center section (600) and the body at the end of the elongated center section and a flange (12,31,41) extending from said closure wall and suitable for mounting said closure device wherein at least a portion of said flange is adapted to overlap the end of said elongated center section and to follow the contour thereof, whereby a telescopic joint is formed.

3.  An aerodynamic device as claimed in Claim 1 or Claim 2, further comprising a trimmable section (90) suitable to be trimmed to fit against the contour of the body.

4.  An aerodynamic device as claimed in any preceding claim, characterised in that said closure device includes an accessory fitting (70).

5.  A closure device for an aerodynamic device having an open-ended elongated center section (600) adapted to be disposed along a windward edge of a body in an airstream, which closure device comprises an end cap (10,5,6) comprising a closure wall (11,13,14) adapted to substantially fill the opening between the end of the elongated center section and said body.

6.     A closure device as claimed in Claim 5 further comprising a flange (12,13,41) extending from said closure wall (11,13,14) wherein at least a portion of said flange is adapted to overlap the end of the elongated center section (600) and to match the contour thereof, whereby a telescopic joint is formed.

7.     A closure device as claimed in Claim 5 or Claim 6, characterised by a trimmable section (90) suitable for supporting the device against said body.

8.     A closure device as claimed in any one of Claims 5 to 7, characterised in that it is formed of plastics material.

9.     A closure device as claimed in Claim 8, characterised in that the plastics material is a fiber reinforced polyurethane.

10.    A closure device as claimed in any one of Claims 5 to 9, characterised by a windward surface area which arcs convexly from the closure wall.

11.    An aerodynamic device in combination with a motor vehicle cargo container (200), which aerodynamic device comprises an open-ended elongated center section (600) and a closure device (10,5,6) mounted at the end of said elongated center section to close same.

FIG.1

FIG.2

FIG.3

FIG.4

FIG.5

**0076706**

## European Patent Office

## EUROPEAN SEARCH REPORT

Application number

EP 82 30 5327

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | S.A.E. JOURNAL, Washington, August 11-14, 1975 P.B.S. LISSAMAN: "Development of devices to reduce the aerodynamic resistance of trucks", pages 1-9 * page 7, figure 5 * | 1,5,10 ,11 | B 62 D 35/00 |
| D | GB-A-2 074 107 (FRUEHAUF) * figure 1; page 3, lines 1-3 * | 1,5,8, 10,11 | |
| P | US-A-4 309 053 (LETT) * column 2, lines 4-8; figures 1,3 * | 1,2,5, 11 | |
| A | GB-A-2 071 034 (BTR) * page 1, lines 91-97 * | 1,8,9, 10,11 | TECHNICAL FIELDS SEARCHED (Int. Cl. ³) B 62 D 35/00 |
| A | US-A-4 159 843 (CROSSMAN) * column 2, lines 3-6; figure 2 * | 1,2,8, 10,11 | |
| D | US-A-3 934 922 (NAC CREADY) * the whole document * | | |

The present search report has been drawn up for all claims

| Place of search | Date of completion of the search | Examiner |
|---|---|---|
| THE HAGUE | 05-01-1983 | SCHMITTER J.M. |

EPO Form 1503. 03.82